# FASCICULE DE BREVET EUROPEEN

(11) **EP 2 460 726 B1**
(45) Date de publication et mention de la délivrance du brevet: **03.04.2013**
(21) Numéro de dépôt: 11170281.7
(22) Date de dépôt: 17.06.2011
(51) Int. Cl.: B64D 1/02

(54) **Dispositif d'accrochage d'une charge sous un aéronef comportant des rotules de liaison**
Aufhängevorrichtung für eine Last unter einem Luftfahrzeug, die mit Kugelgelenkverbindungen ausgestattet ist
Device for attaching a load to the underside of an aircraft using ball and socket joints

(30) Priorité: 06.12.2010 FR 1060108
(43) Date de publication de la demande: 06.06.2012
(73) Titulaire: ALKAN, 94460 Valenton (FR)
(72) Inventeur: Guaraldo, Denis, 78140 VELIZY (FR)
(74) Mandataire: Zimmermann, Alain

(56) Documents cités:
- FR-A1- 2 643 332
- FR-A1- 2 654 701

## Description

La présente invention concerne un dispositif d'accrochage d'une charge, telle qu'un emport, sous un aéronef, notamment sous une aile d'avion. Un tel dispositif d'accrochage est connu de FR 2 643 332, qui est regardé comme l'art antérieur le plus proche.

Actuellement, pour accrocher des charges sous les avions, en particulier des réservoirs de carburant ou des armes telles que des bombes, les avionneurs font appel à des dispositifs d'accrochage venant s'insérer d'une part dans des puits de fixation disposés sous l'appareil (aile notamment) et d'autre part dans des logements prévus à cet effet dans ladite charge.

Or, les charges sont parfois très différentes pour un même avion, que ce soit notamment leur poids, leur forme, leurs dimensions ou leur disposition. Pour des raisons de sécurité, les dispositifs d'accrochage doivent pouvoir supporter la charge sans que celle-ci se détache sous les contraintes infligées lors des différentes phases (accrochage, décollage, atterrissage, appontage, etc.) et libérer celle-ci facilement et de manière fiable lorsque cela est nécessaire (largage, dépose pour maintenance).

Il convient également de bien dimensionner ces dispositifs d'accrochage et de prévoir que ces derniers puissent avoir une certaine plage angulaire de débattement afin de les adapter au plus grand nombre possible de charges.

Or, du fait de leur construction comportant des galets en appui sur une tulipe de faible épaisseur, les dispositifs actuels ne garantissent pas de résistance suffisante, notamment en ce qui concerne la corrosion sous contrainte. Leur durée de vie s'en trouve donc réduite tout comme leur fiabilité. Leur maintenance s'avère par ailleurs délicate et nécessite souvent le démontage de l'intégralité du dispositif, avec les conséquences que cela implique en termes d'immobilisation, et de coût en temps et en main d'oeuvre. Enfin, le choix des matériaux constituant certaines pièces de ce type de dispositif de l'art antérieur n'est pas toujours adapté aux contraintes mises en jeux, ce qui augmentent encore par exemple l'usure prématurée ou les risques d'apparition d'amorce de crique.

Un but de la présente invention est donc de résoudre les problèmes cités précédemment, à l'aide d'une solution de conception plus facile à utiliser et optimisée en termes d'efficacité.

Ainsi, la présente invention a pour objet un dispositif d'accrochage d'une charge, telle qu'un emport, sous un aéronef, notamment sous une aile d'avion, comprenant au moins deux accrocheurs inclinés entre eux, chaque accrocheur s'étendant selon un axe longitudinal et comportant :
- une première rotule, ou tulipe, de liaison à un puits de réception de l'aéronef, et une seconde rotule de liaison à la charge, un premier entraxe étant défini entre les premières rotules et un second entraxe, différent du premier entraxe, étant défini entre les secondes rotules,
- un système de génération de précontrainte destiné à rapprocher ou éloigner axialement les deux rotules d'un même accrocheur selon le type de charge supportée,
- chaque première rotule comportant une embase supérieure destinée à être fixée au puits de réception de l'aéronef, une embase inférieure et des galets de pression disposés entre un piston central interne et l'embase inférieure,
caractérisé en ce que la première rotule comporte en outre une bague externe rotulante mobile intercalée entre les galets et l'embase inférieure, les galets reposant en permanence sur cette bague, laquelle étant soumise uniquement aux efforts de compression provoqués par lesdits galets.

Selon des modes de réalisation préférés, le dispositif conforme à la présente invention comprend l'une au moins des caractéristiques suivantes :
- l'embase inférieure est fixe par rapport à l'embase supérieure tandis que la bague externe rotulante est conçue pour se mouvoir à l'intérieur de l'embase inférieure autour d'un point fixe de rotation de la première rotule ;
- l'embase inférieure est fixée sur l'extérieur de l'embase supérieure, par exemple par vissage, et définit un logement annulaire présentant un fond à profil sphérique sur lequel repose et glisse la bague externe rotulante ;
- la bague externe rotulante présente un profil intérieur courbe définissant une auge de réception des galets ;
- les galets reposent sur une bague interne fixe solidaire du piston et supportant l'autre composante des efforts de compression provoquée par les galets ;
- le dispositif comporte en outre des moyens de blocage en rotation de l'accrocheur disposés selon son axe longitudinal ;
- les moyens de blocage en rotation comportent plusieurs doigts axiaux identiques répartis sur le sommet d'un noyau et coopérant avec des lamages ménagés dans le puits de réception de l'aéronef ;
- les moyens de blocage en rotation comportent en outre au moins une vis à bille et une butée, toutes deux étant disposées radialement par rapport au noyau pour empêcher la rotation de ce dernier par rapport à l'embase supérieure ; et
- la bague externe est réalisée en acier à roulement tandis que l'embase inférieure est en acier inoxydable.

L'invention va maintenant être décrite plus en détail en référence à des modes de réalisation particuliers donnés à titre d'illustration uniquement et représentés sur les figures annexées dans lesquelles :
- La figure 1 est une vue schématique de côté d'un dispositif d'accrochage conforme à la présente invention installé sous l'aile d'un aéronef ;
- Les figure 2 et 3 sont des vues en coupe d'une partie supérieure du dispositif de la figure 1 dans deux positions différentes ;
- La figure 4 est une vue de détail en coupe en perspective d'une variante de réalisation des figures 2 et 3 ; et
- La figure 5 est une vue en coupe de la figure 4.

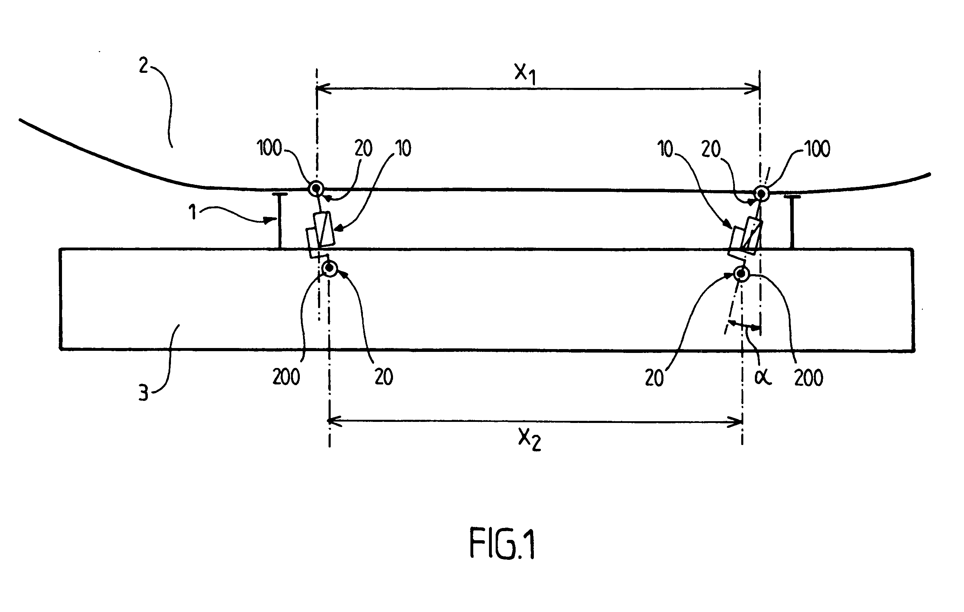

La figure 1 représente de manière schématique un dispositif 1 d'accrochage, sous un aéronef 2, d'une charge 3.

Plus précisément, ce dispositif 1 est adapté dans le cas présent pour supporter un emport 3 sous une aile d'avion de combat 2.

A cet effet, le dispositif comporte deux accrocheurs 10 inclinés l'un par rapport à l'autre et comportant chacun deux rotules 20, ou tulipes de liaison, réparties en une première rotule 100 et une seconde rotule 200.

Ainsi, la première rotule, dire également rotule supérieure, est destinée à être reliée à un puits de réception ménagé dans l'aile de l'avion tandis que la seconde rotule, dite rotule inférieure, est conçue quant à elle pour supporter l'emport par l'intermédiaire d'un autre puits.

Un premier entraxe X1 est défini entre les premières rotules 100 et un second entraxe X2 est défini entre les secondes rotules 200, le second entraxe X2 étant différent du premier entraxe X1 de sorte que chaque accrocheur 10 est incliné d'un angle d'inclinaison α avec la verticale mesurant quelques degrés, typiquement de l'ordre de ± 1,5°.

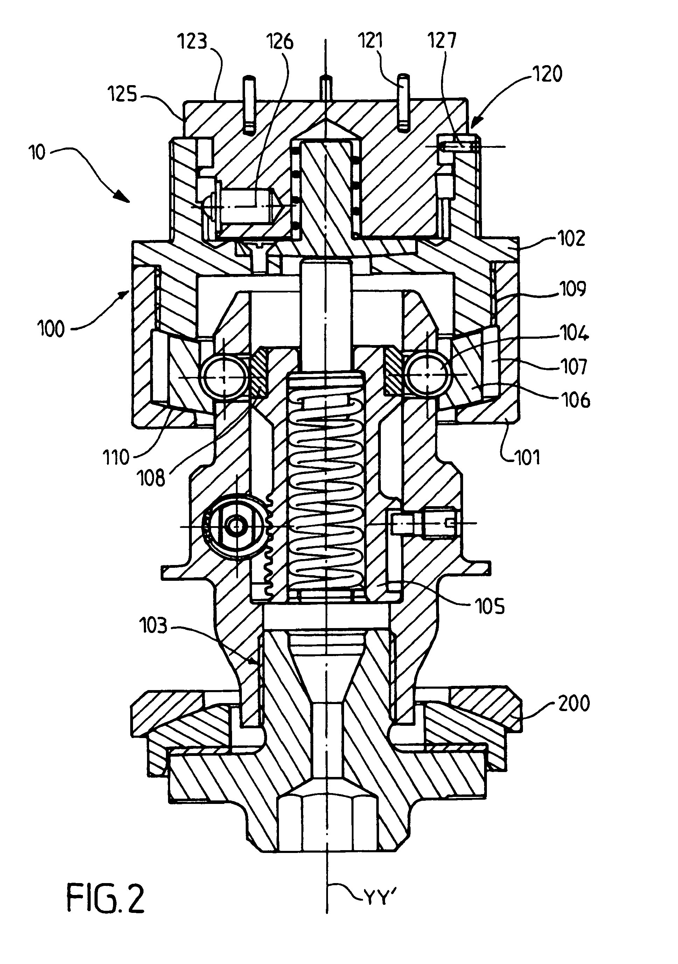

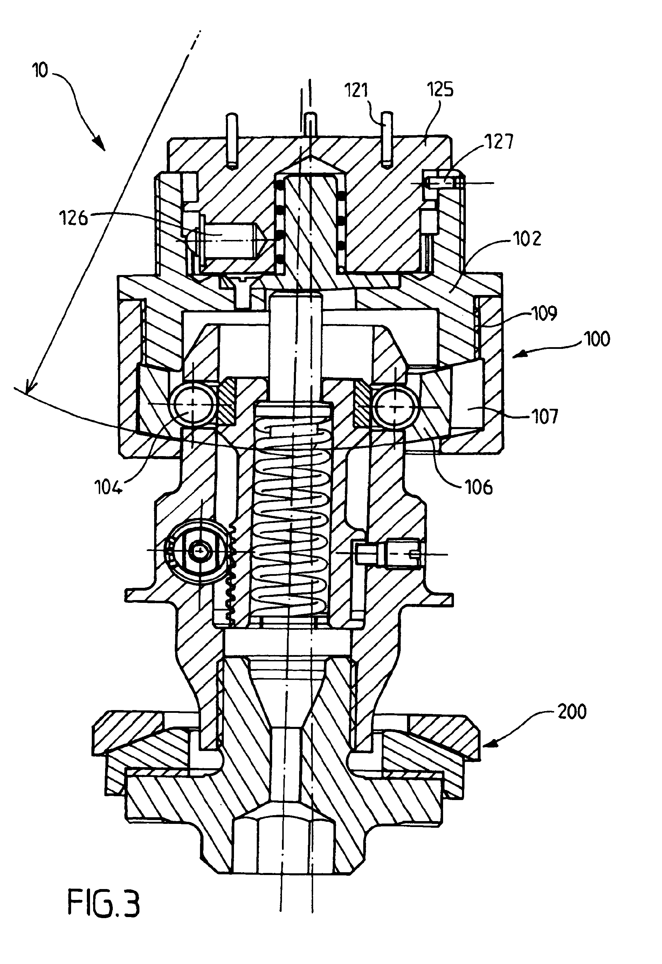

Un accrocheur 10 (plus spécifiquement la rotule supérieure 100) est décrit ci-après plus en détail en relation avec les figures 2 à 5.

Ainsi, chaque première rotule 100 comporte une embase supérieure 101 destinée à être fixée au puits de réception de l'aile d'avion, une embase inférieure 102, des éléments réglables 103 destinés à rapprocher ou éloigner axialement l'une de l'autre les deux rotules d'un même accrocheur 10 selon le type de charge supportée, et des galets de pression 104 disposés entre un piston central interne 105 et l'embase inférieure 101.

Plus précisément, la première rotule 100 comporte en outre une bague externe rotulante mobile 106 intercalée entre les galets 104 et l'embase inférieure 101.

En fonctionnement, les galets 104 reposent en permanence sur la bague externe rotulante 106 qui peut se déplacer (liaison rotule) à l'intérieur d'un logement 107 défini entre l'embase inférieure 101 et une bague interne fixe 108 solidaire du piston 105. A cet effet, le logement 107 présente un fond 110 à profil sphérique sur lequel repose et glisse la bague externe rotulante 106.

Selon une caractéristique importante de la présente invention, la bague externe rotulante 106 est soumise uniquement aux efforts de compression provoqués par les galets 104 lors des mouvements de rotation de l'accrocheur 10, la bague interne 108 supportant l'autre composante des efforts de compression provoquée par les galets 104.

L'embase inférieure 101 est fixe par rapport à l'embase supérieure 102, par exemple par l'intermédiaire d'une liaison par vissage 109, tandis que la bague externe rotulante 106 est conçue pour se mouvoir à l'intérieur de l'embase inférieure 101 autour d'un point fixe de rotation de la première rotule 100.

Chaque rotule supérieure 100 comporte en outre des moyens 120 de blocage en rotation de l'accrocheur disposés selon son axe longitudinal YY'. Plus précisément, les moyens de blocage en rotation 120 comportent plusieurs doigts axiaux 121 identiques répartis sur le sommet 122 d'un noyau 125 et coopérant avec des lamages ménagés dans le puits de réception de l'aile d'avion. Les moyens de blocage en rotation 120 comportent en outre au moins une vis à bille 126 et une butée 127 disposée radialement par rapport au corps pour empêcher la rotation du noyau 125 par rapport à l'embase supérieure 102 et limiter axialement le débattement du système anti rotation.

La bague externe rotulante 106 est réalisée en acier à roulement tandis que l'embase inférieure est en acier inoxydable

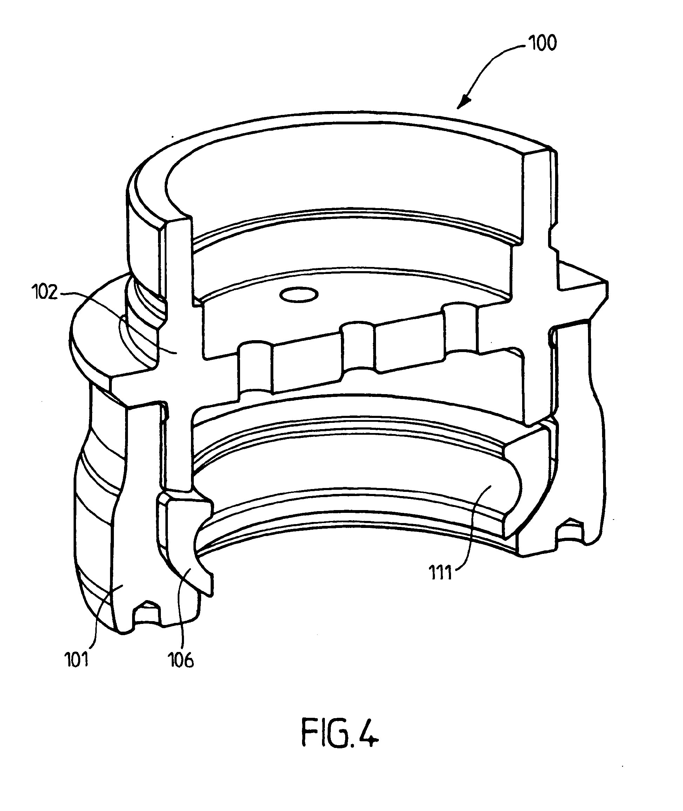

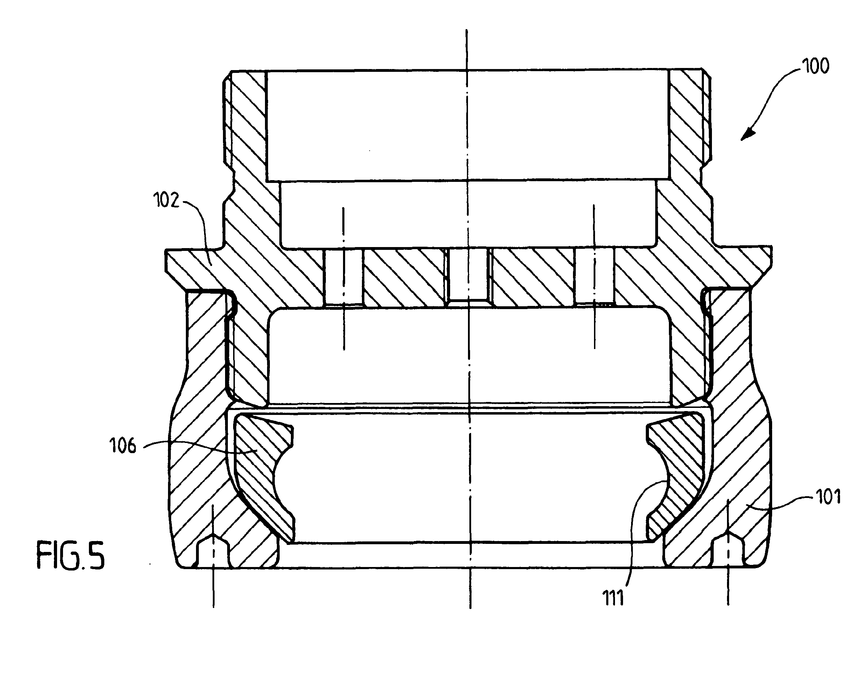

Selon le mode de réalisation des figures 4 et 5, la bague externe rotulante 106 présente un profil intérieur courbe 111 définissant une gorge torique de réception des galets 104.

Dans les modes de réalisation montrés, une fois les accrocheurs bloqués dans les puits de l'aile de l'avion à l'aide des doigts de centrage et de la vis à bille, et une fois la charge accrochée, ce sont les galets 104 et les bagues interne 108 et externe 106 qui encaissent les efforts provoqués par les mouvements (de l'avion en particulier). La bague externe rotulante 106 étant réalisée en acier à roulement, sa résistance aux contraintes de compression est nettement supérieure à celle de l'embase inférieure 101 réalisée en acier inoxydable. Par contre, les embases supérieure et inférieur fabriquées dans de l'acier inoxydable encaissent la composante de traction des efforts engendrés et présentent une résistance optimum à la corrosion sous contrainte.

A titre d'exemple, la charge à la rupture des solutions de l'art antérieur pouvaient atteindre 39 000 daN tandis qu'elle peut atteindre 57 000 daN dans la solution de la présente invention.

Par ailleurs, vue la conception de cette solution, en cas de rupture de la bague rotulante 106, l'accrocheur conserve ses capacités et peut encore soutenir la charge.

Il va de soi que la description détaillée de l'objet de l'Invention, donnée uniquement à titre d'illustration, ne constitue en aucune manière une limitation, les équivalents techniques étant également compris dans le champ de la présente invention.

Ainsi, 1 forme des bagues interne et externe peut varier pour s'adapter à celle des galets. Les moyens de fixation entre les deux embases peuvent être différents d'une liaison par vissage.

## Revendications

1. Dispositif (1) d'accrochage d'une charge (3), telle qu'un emport, sous un aéronef (2), notamment sous une aile d'avion, comprenant au moins deux accrocheurs (10) inclinés entre eux, chaque accrocheur (10) s'étendant selon un axe longitudinal et comportant :
- une première rotule (100), ou tulipe, de liaison à un puits de réception de l'aéronef (2), et une seconde rotule (200) de liaison à la charge (3), un premier entraxe (X1) étant défini entre les premières rotules (100) et un second entraxe (X2), différent du premier entraxe, étant défini entre les secondes rotules (200),
- un système de génération de précontrainte (103) destiné à rapprocher ou éloigner axialement les deux rotules (100, 200) d'un même accrocheur (10) selon le type de charge supportée,
- chaque première rotule (100) comportant une embase supérieure (102) destinée à être fixée au puits de réception de l'aéronef (2), une embase inférieure (101) des galets de pression (104) disposés entre un piston central interne (105) et l'embase inférieure (101),
**caractérisé en ce que** la première rotule (100) comporte en outre une bague externe rotulante mobile (106) intercalée entre les galets (104) et l'embase inférieure (101), les galets (104) reposant en permanence sur cette bague (106), laquelle étant soumise uniquement aux efforts de compression provoqués par lesdits galets (104).

2. Dispositif selon la revendication 1, **caractérisé en ce que** l'embase inférieure (101) est fixe par rapport à l'embase supérieure (102) tandis que la bague externe rotulante (106) est conçue pour se mouvoir à l'intérieur de l'embase inférieure (101) autour d'un point fixe de rotation de la première rotule (100).

3. Dispositif selon la revendication 2, **caractérisé en ce que** l'embase inférieure (101) est fixée sur l'extérieur de l'embase supérieure (102), par exemple par vissage (109), et définit un logement annulaire (107) présentant un fond (110) à profil sphérique sur lequel repose et glisse la bague externe rotulante (106).

4. Dispositif selon l'une quelconque des revendications précédentes, **caractérisé en ce que** la bague externe rotulante (106) présente un profil intérieur (111) courbe définissant une gorge torique de réception des galets (104).

5. Dispositif selon l'une quelconque des revendications précédentes, **caractérisé en ce que** les galets (104) reposent également sur une bague interne fixe (108) solidaire du piston (105) et supportant l'autre composante des efforts de compression provoquée par les galets (104).

6. Dispositif selon l'une quelconque des revendications précédentes, **caractérisé en ce qu'**il comporte en outre des moyens (120) de blocage en rotation de l'accrocheur (10) disposés selon son axe longitudinal (YY').

7. Dispositif selon la revendication 6, **caractérisé en ce que** les moyens de blocage en rotation (120) comportent plusieurs doigts axiaux (121) identiques répartis sur le sommet (123) d'un noyau (125) et coopérant avec des lamages ménagés dans le puits de réception de l'aéronef (2).

8. Dispositif selon la revendication 7, **caractérisé en ce que** les moyens de blocage en rotation (120) comportent en outre au moins une vis à bille (126) et une butée (127), toutes deux étant disposées radialement par rapport au noyau (125) pour empêcher la rotation de ce dernier par rapport à l'embase supérieure (102).

9. Dispositif selon l'une quelconque des revendications précédentes, **caractérisé en ce que** la bague externe (106) est réalisée en acier à roulement tandis que l'embase inférieure (101) est en acier inoxydable.

## Claims

1. Device (1) for attaching a load (3), such as a payload, to the underside of an aircraft (2), in particular to the underside of an aircraft wing, comprising at least two couplings (10) inclined relative to one another, each coupling (10) extending along a longitudinal axis and including:
- a first ball joint (100), or sway brace, for connection to a receiving well of the aircraft (2) and a second ball joint (200) for connection to the load (3), a first centre distance (X1) being defined between the first ball joints (100) and a second centre distance (X2) different from the first centre distance being defined between the second ball joints (200),
- a system (103) for generating initial stress intended to move the two ball joints (100, 200) of one coupling (10) axially closer together or further apart depending on the type of load supported,
- each first ball joint (100) including an upper flange (102) intended to be fixed to the receiving well of the aircraft (2), a lower flange (101) and pressure rollers (104) disposed between an inner central piston (105) and the lower flange (101), **characterised in that** the first ball joint (100) moreover includes a movable swivelling outer ring (106) inserted between the rollers (104) and the lower flange (101), the rollers (104) resting permanently on this ring (106) itself subjected solely to the compressive stress produced by the said rollers (104).

2. Device according to claim 1, **characterised in that** the lower flange (101) is fixed relative to the upper flange (102), while the swivelling outer ring (106) is designed to move into the lower flange (101) about a fixed point of rotation of the first ball joint (100).

3. Device according to claim 2, **characterised in that** the lower flange (101) is fixed to the outside of the upper flange (102), e.g. by screwing (109), and defines an annular housing (107) having a base (110) with a spherical profile on which the swivelling outer ring (106) rests and slides.

4. Device according to any one of the preceding claims, **characterised in that** the swivelling outer ring (106) has a curved inner profile (111) defining a toric groove for receiving the rollers (104).

5. Device according to any one of the preceding claims, **characterised in that** the rollers (104) also rest on a fixed inner ring (108) integral with the piston (105) and supporting the other component of the compressive stress produced by the rollers (104).

6. Device according to any one of the preceding claims, **characterised in that** it moreover includes anti-rotation means (120) for the coupling (10), disposed along its longitudinal axis (YY').

7. Device according to claim 6, **characterised in that** the anti-rotation means (120) include several identical axial fingers (121) distributed over the top (123) of a core (125) and cooperating with recesses formed in the receiving well of the aircraft (2).

8. Device according to claim 7, **characterised in that** the anti-rotation means (120) moreover include at least one ball screw (126) and a stop (127), both disposed radially relative to the core (125) in order to prevent rotation of the latter relative to the upper flange (102).

9. Device according to any one of the preceding claims, **characterised in that** the outer ring (106) is made of bearing steel, while the lower flange (101) is made of stainless steel.

## Patentansprüche

1. Aufhängevorrichtung (1) für eine Last wie zum Beispiel eine Abwurflast unter einem Luftfahrzeug (2), insbesondere unter einem Flugzeugflügel, umfassend wenigstens zwei einander zugeneigte Befestigungseinrichtungen (10), wobei jede Befestigungseinrichtung (10) sich gemäß einer Längsachse erstreckt und umfasst :
- ein erstes Kugelgelenk (100), oder Muffe (tulipe), zur Verbindung mit einem Aufnahmeschacht des Luftfahrzeugs (2), und ein zweites Kugelgelenk (200) zur Verbindung mit der Last (3), wobei ein erster Achsabstand (X1) zwischen den ersten Kugelgelenken (100) definiert ist, und ein zum ersten Achsabstand unterschiedlicher zweiter Achsabstand (X2) zwischen den zweiten Kugelgelenken (200) definiert ist,
- ein System zur Erzeugung von Vorspannung (103), dazu bestimmt, in Abhängigkeit vom Typ der getragenen Last die beiden Kugelgelenke (100, 200) einer selben Befestigungseinrichtung (10) einander anzunähern oder voneinander zu entfernen,
- jedes erste Kugelgelenk (100) umfasst einen oberen Sockel (102), bestimmt zur Befestigung in dem Aufnahmeschacht des Luftfahrzeugs (2), einen unteren Sockel (101) der Druckrollen (104), angeordnet zwischen einem zentralen Innenkolben und dem unteren Sockel (101),
- **dadurch gekennzeichnet, dass** das erste Kugelgelenk (100) außerdem einen beweglichen Kugelgelenk-Außenring (106) umfasst, eingefügt zwischen den Rollen (104) und dem unteren Sockel (101), wobei die Rollen (104) permanent auf diesem Ring (106) ruhen, der nur den durch die genannten Rollen (104) verursachten Druckbelastungen ausgesetzt ist.

2. Vorrichtung nach Anspruch 1, **dadurch gekennzeichnet, dass** der untere Sockel (101) in Bezug auf den oberen Sockel (102) befestigt ist, während der Kugelgelenk-Außenring (106) so konzipiert ist, dass er sich im Innern des unteren Sockels (101) um einen festen Drehpunkt des ersten Kugelgelenks (100) bewegen kann.

3. Vorrichtung nach Anspruch 2, **dadurch gekennzeichnet, dass** der untere Sockel (101) auf der Außenseite des oberen Sockels (102) befestigt ist, zum Beispiel durch Verschraubung (109), und einen ringförmigen Sitz (107) definiert, mit einem kugelförmigen Boden (110), auf dem der Kugelgelenk-Außenring (106) ruht und gleitet.

4. Vorrichtung nach einem der vorhergehenden Ansprüche, **dadurch gekennzeichnet, dass** der Kugelgelenk-Außenring (106) ein Innenprofil (111) aufweist, das eine ringförmige Hohlkehle zur Aufnahme der Rollen (104) definiert.

5. Vorrichtung nach einem der vorhergehenden Ansprüche, **dadurch gekennzeichnet, dass** die Rollen (104) auch auf einem festen Innenring (108) ruhen, der mit dem Kolben (105) fest verbunden ist und die andere Komponente der durch die Rollen (104) verursachten Druckbelastungen aufnimmt.

6. Vorrichtung nach einem der vorhergehenden Ansprüche, **dadurch gekennzeichnet, dass** sie außerdem Rotationsblockiereinrichtungen (120) der Befestigungseinrichtung (10) umfasst, angeordnet gemäß ihrer Längsachse (YY').

7. Vorrichtung nach Anspruch 6, **dadurch gekennzeichnet, dass** die Rotationsblockiereinrichtungen (120) mehrere identische Axialfinger (121) umfassen, die auf der Oberseite (123) eines Kerns (125) verteilt sind und mit Senkungen kooperieren, die in die Aufnahmeschächte des Luftfahrzeugs eingearbeitet sind.

8. Vorrichtung nach Anspruch 7, **dadurch gekennzeichnet, dass** die Rotationsblockiereinrichtungen (120) außerdem eine Kugelschraube (126) und einen Anschlag (127) umfassen, alle beide radial angeordnet in Bezug auf einen Kern (125), um die Rotation dieses Letzteren in Bezug auf den oberen Sockel (102) zu verhindern.

9. Vorrichtung nach einem der vorhergehenden Ansprüche, **dadurch gekennzeichnet, dass** der Außenring (106) aus Kugellagerstahl gefertigt ist, während der untere Sockel (101) aus rostfreiem Stahl ist.
